# EUROPÄISCHE PATENTSCHRIFT

(11) **EP 1 341 832 B1**
(45) Veröffentlichungstag und Bekanntmachung des Hinweises auf die Patenterteilung: **19.10.2016**
(21) Anmeldenummer: 01986855.3
(22) Anmeldetag: 06.12.2001
(51) Int. Cl.: C08G 18/10, C08G 18/40, C08G 18/42, C09J 175/04, C08G 18/12

(54) **POLYURETHAN-PREPOLYMERE MIT NCO-GRUPPEN UND NIEDRIGEM GEHALT AN MONOMEREN POLYISOCYANAT**
POLYURETHANE-PREPOLYMERS COMPRISING NCO GROUPS AND A LOW CONTENT OF MONOMERIC POLYISOCYANATE
PREPOLYMERES POLYURETHANE COMPRENANT DES GROUPES NCO ET UNE FAIBLE TENEUR EN POLYISOCYANATE MONOMERE

(30) Priorität: 15.12.2000 DE 10062587; 15.12.2000 DE 10062583; 15.12.2000 DE 10062584
(43) Veröffentlichungstag der Anmeldung: 10.09.2003
(73) Patentinhaber: Henkel AG & Co. KGaA, 40589 Düsseldorf (DE)
(72) Erfinder: BOLTE, Gerd, 40789 Monheim (DE); HENKE, Günter, 41470 Neuss (DE); MECKEL-JONAS, Claudia, 41468 Neuss (DE); PLOGMAKER, Dagmar, 45130 Essen (DE)
(86) Internationale Anmeldenummer: PCT/EP2001/014324
(87) Internationale Veröffentlichungsnummer: WO 2002/048227

(56) Entgegenhaltungen:
- EP-A- 0 107 014
- EP-A- 0 590 398
- WO-A-98/29466
- WO-A-99/24486

## Beschreibung

Die Erfindung betrifft ein Polyurethan (PU)-Prepolymer mit Isocyanat (NCO)-Gruppen und niedrigem Gehalt an monomeren Polyisocyanat, sowie dessen Herstellung und Verwerdung.
Polyurethan-Prepolymere mit NCO-Gruppen, bevorzugt entständigen NCO-Gruppen, sind seit langem bekannt Sie können mit geeigneten Härtem - meist polyfunktionellen Alkoholen - in einfacher Weise zu hochmolekularen Stoffen kettenverlängert oder vernetzt werden. Polyurethan-Prepolymere haben auf vielen Anwendungsgebieten Bedeutung erlangt, so bei der Herstellung von Klebstoffen, Beschichtungen, Gießharzen und Formkörpern.
Um PU-Prepolymere mit endständigen Isocyanatgruppen zu erhalten, ist es üblich, polyfunktionelle Alkohole mit einem Oberschuss an monomeren Potyisocyanaten, in der Regel wenigstens überwiegend Diisocyanate, zur Reaktion zu bringen. Hierbei läßt sich das Molekulargewicht wenigstens näherungsweise über das Verhältnis von OH-Gruppen zu Isocyanatgruppen steuern. Während ein Verhältnis von OH-Gruppen zu Isocyanatgruppen von 1 : 1 oder nahe 1 : 1 in der Regel zu hohen Molekulargewichten führt, wird beispielsweise bei einem Verhältnis von etwa 2 : 1 bei der Verwendung von Diisocyanaten im statistischen Mittel an jede OH-Gruppe ein Diisocyanatmolekül angehängt, so dass es im Verlauf der Reaktion im Idealfall nicht zu Oligomerenbildung bzw. Kettenverlängerung kommt
In der Praxis lassen sich solche Kettenverlängerungsreaktionen allerdings nicht unterbinden, was dazu führt dass am Ende der Umsetzung, unabhängig von der Reaktionszeit, eine gewisse Menge der im Überschuss eingesetzten Komponente übrig bleibt

Wird in der Reaktion von Diisocyanaten mit polyfunktionellen Alkoholen, in der Regel wenigstens überwiegend Diolen, als Überschusskomponente beispielsweise ein Diisocyanat eingesetzt und besitzen die Isocyanatgruppen des Diisocyanates annähernd die gleiche Reaktivität, so verbleiben nach der Schulz-Flory-Statistik beispielsweise bei einem Reaktionsverhältnis von NCO/OH von 2:1 etwa 25 % des eingesetzten monomeren Diisocyanats als Monomer im Prepolymer.

Störend wirkt sich ein Gehalt an monomerem Polyisocyanat beispielsweise dann aus, wenn es sich um leicht flüchtige Diisocyanate handelt. Kleb-/Dichtstoffe und insbesondere Schmelzklebstoffe auf PU-Basis werden bei erhöhter Temperatur verarbeitet So liegen die Verarbeitungstemperaturen von Schmelzklebstoffen zwischen 100 °C bis 200 °C, die von beispielsweise Kaschierklebstoffen zwischen Raumtemperatur und 150 °C. Schon bei Raumtemperatur weisen flüchtige Diisocyanate, wie IPDI oder TDI, einen nicht zu vernachlässigen Dampfdruck auf. Dieser merkliche Dampfdruck ist insbesondere bei einem Sprühauftrag gravierend, da hierbei signifikante Mengen an Isocyanatdämpfen über dem Applikationsgerät auftreten können, die wegen ihrer reizenden und sensibilisierenden Wirkung toxisch sind. Die Anwendung von Produkten mit einem hohen Gehalt an solchen leichtflüchtigen Diisocyanaten erfordert seitens des Anwenders aufwendige Maßnahmen zum Schutz der das Produkt verarbeitenden Personen, insbesondere aufwendige Maßnahmen zur Reinhaltung der Atemluft, gesetzlich vorgegeben durch die höchstzulässige Konzentration von Arbeitsstoffen als Gas, Dampf oder Schwebstoff in der Luft am Arbeitsplatz (jährlich aktualisierte MAK-Wert-Liste der Technischen Regel TRGS 900 des Bundesministeriums für Arbeit und Soziales).

Da Schutz- und Reinigungsmaßnahmen in der Regel mit hohen finanziellen Investitionen verbunden sind, besteht seitens der Anwender ein Bedürfnis nach Produkten, die einen, in Abhängigkeit vom verwendeten Isocyanat, möglichst niedrigen Anteil an leichtflüchtigen Diisocyanaten aufweisen.

Unter "leichtflüchtig" werden im Rahmen des vorliegenden Textes solche Substanzen verstanden, die bei etwa 30°C einen Dampfdruck von mehr als etwa 0,0007 mm Hg oder einen Siedepunkt von weniger als etwa 190°C (70 mPa) aufweisen.

Setzt man anstatt der leichtflüchtigen Diisocyanate schwerflüchtige Diisocyanate ein, insbesondere die weit verbreiteten bicyclischen Diisocyanate, beispielsweise Diphenylmethandiisocyanate, so erhält man in der Regel PU-Prepolymere bzw. darauf basierende Klebstoffe mit einer Viskosität, die üblicherweise außerhalb des für einfache Verarbeitungsmethoden brauchbaren Bereichs liegt. Dies geschieht auch / oder zusätzlich dann, wenn man die Absenkung des Monomerengehaltes durch Verringerung des NCO/OH-Verhältnisses erreichen will. In diesen Fällen kann die Viskosität der Polyurethan-Prepolymeren durch Zugabe geeigneter Lösemittel abgesenkt werden, was aber der meist geforderten Lösemittelfreiheit widerspricht Eine weitere Möglichkeit zur Absenkung der Viskosität unter Vermeidung von Lösemitteln besteht in der Zugabe eines Überschusses an monomeren Polyisocyanaten als sogenannte Reaktiwerdünner Im Rahmen eines späteren Härtungsvorgangs (nach der Zugabe eines Härters oder durch Härten unter Feuchtigkeitseinfluss) werden diese mit in die Beschichtung oder Verklebung eingebaut

Während sich die Viskosität der Polyurethan-Prepolymeren auf diese Weise tatsächlich absenken läßt, führt die in der Regel unvollständige Umsetzung des Reaktivverdünners bzw. allgemein das Vorhandensein von monomeren, nicht umgesetzten Ausgangs-Polyisocyanat häufig zu einem Gehalt an freien, monomeren Polyisocyanaten in der Verklebung bzw. der Beschichtung, die beispielsweise innerhalb der Beschichtung oder Verklebung, oder zum Teil auch in die beschichteten oder verklebten Materialien hinein, "wandern" können. Solche wandernden Bestandteile werden in Fachkreisen häufig als "Migrate" bezeichnet Durch Kontakt mit Feuchtigkeit werden die Isocyanatgruppen der Migrate kontinuierlich zu Aminogruppen umgesetzt Der Gehalt der dadurch entstehenden Amine, insbesondere der primären aromatischen Amine, muß unter der auf Anilin-hydrochlorid bezogenen Nachweisgrenze von 0,2 Mikrogramm Anilinhydrochlorid/100 ml Probe liegen (Bundesinstitut für gesundheitlichen Verbraucherschutz und Veterinärmedizin, BGW, nach amtlicher Sammlung von Untersuchungsverfahren nach § 35 LMBG - Untersuchung von Lebensmitteln/Bestimmung von primären aromatischen Aminen in wäßrigen Prüflebensmitteln).

Im Verpackungsbereich, speziell bei Lebensmittelverpackungen, sind Migrate unerwünscht. Einerseits kann die Wanderung der Migrate durch das Verpackungsmaterial hindurch zu einer Kontamination des verpackten Gutes führen, andererseits sind, abhängig von der Menge des migratfähigem freien monomeren Polyisocyanates, lange Wartezeiten notwendig, bevor das Verpackungsmaterial "Migrat-frei" ist und verwendet werden darf.
Ein weiterer unerwünschter Effekt, der durch die Migration monomerer Polyisocyanate hervorgerufen werden kann, ist der sogenannte Antisiegeleffekt bei der Herstellung von Beuteln oder Tragetaschen aus kaschierten Kunststoff-Folien: Häufig enthalten die kaschierten Kunststoff-Folien Gleitmittel auf Basis von Fettsäureamiden. Durch Reaktion von migriertem monomeren Polyisocyanat mit dem Fettsäureamid und/oder Feuchtigkeit werden Harnstoffverbindungen gebildet, die einen Schmelzpunkt besitzen, der über der Versiegelungstemperatur der Kunststoff-Folien liegen kann. Dadurch entsteht eine artfremde Antisiegel-Schicht zwischen den zu versiegelnden Folienteilen, die einer einheitlichen Nahtbildung entgegenwirkt Aber nicht nur die Anwendung von Reaktivklebstoffen, die noch monomeres Polyisocyanat enthalten, führt zu Problemen, sondern bereits auch das in Inverkehrbringen. Im Zusammenhang mit Verbraucherschutz, Sicherheit und Arbeitshygiene wurde am 01. Juni 2000 die Kennzeichnungspflicht isocyanathaltiger Produkte weiter verschärft. So fallen Stoffe und Zubereitungen, die beispielsweise mehr als 0,1 % freies MDI oder TDI enthalten, unter die Gefahrstoffverordnung und sind entsprechend mit Xi zu kennzeichnen. Mit der Kennzeichnungspflicht sind spezielle Maßnahmen zur Verpackung und dem Transport verbunden.

Verfahren, PU-Prepolymere mit einem geringen Anteil an monomeren Polyisocyanat, in der Regel monomeren Ausgangsdiisocyanat, zu erhalten und gegebenenfalls die oben geschilderten Nachteile zu vermeiden bzw. die physiologischen Eigenschaften PU-basierender Klebstoffe zu verbessern, sind bekannt

Die DE-PS 953 012 beschreibt ein Verfahren zur Herstellung von löslichen, höhermolekularen und zur weiteren Umsetzung befähigten Polyisocyanaten. Hierbei werden mehrwertige, niedermolekulare Alkohole mit solchen Mengen an Diisocyanaten umgesetzt, dass pro Hydroxylgruppe mehr als eine und weniger als zwei Isocyanatgruppen entfallen. Der besondere Wert dieser neuen Polyisocyanate besteht darin, dass sie infolge ihres erhöhten Molekulargewichtes praktisch keinen Dampfdruck mehr zeigen und daher vom physiologischen Stand harmlos sind. Geeignete Polyalkohohle sind u. a. Ethylenglykol, Hexandiol, Diethylenglykol, Methythexanol. Als Diisocyanate werden u. a. 4,4'-Diphenylmethandiisocyanat, Hexamethylendiisocyanat, Toluylendiisocyanat genannt
Die DE 37 39 261 A1 betrifft ein Verfahren zur Herstellung von Urethangruppen aufweisenden Polyisocyanaten durch Umsetzung von aromatischen Diisocyanaten mit mehrwertigen Alkoholen des Molekulargewichtsbereichs 62 bis 250 und anschließender Entfernung des nicht umgesetzten, überschüssigen Ausgangsdiisocyanats durch spezielle Destillation. Als Diisocyanate werden 2,4-Diisocyanatotoluol oder dessen technische Gemische mit 2,6-Diisocyantotoluol bevorzugt eingesetzt. Die Verfahrensprodukte zeichnen sich durch einen besonders niedrigen Gehalt an freiem Ausgangsdiisocyanat von unter 0,3 Gew.-% aus.
Aus der DE 41 40 660 A1 sind Ether- und Urethangruppenaufweisende Polyisocyanate bekannt, hergestellt durch Umsetzung von Polyhydroxypolyethem des Molekulargewichtsbereiches 350 bis 500 mit überschüssigen Mengen an Toluylendiisocyanat und anschließender destillativer Entfernung von nicht umgesetzten Überschuss dieses Ausgangsdiisocyanats bis auf einen Restgehalt von weniger als 0,1 Gew.-%.
In der DE 42 32 015 A1 werden lösungsmittelfreie Zweikomponenten-Polyurethanklebstoffsysteme mit hoher Anfangsfestigkeit und niedrigen Migrationswerten auf Basis von Hydroxylpolyestem und Isocyanatgruppen enthaltenden Prepolymeren beschrieben. Das Isocyanatgruppen enthaltende Prepolymer wird hergestellt aus Polyetherpolyolen mit einem mittleren Molekulargewicht von 400 bis 1500 und 2,4-oder 2,6-Toluylendiisocyanaten oder deren Gemischen. Die Verwendung eines hohen Oberschusses von Toluylendiisocyanat, d. h. eines NCO- zu OH-Gruppenverhältnisses von größer zwei, führt zu Prepolymeren mit hohem Monomergehalt, der jedoch durch Abdestillieren oder Extrahieren des überschüssigen Monomeren, gegebenenfalls unter Mitverwendung eines inerten Schleppmittels, auf Werte kleiner 0,15 Gew-% reduziert werden kann; solche Prepolymere zeichnen sich durch besonders niedrige Viskositäten und einen Isocyanatgehalt zwischen 4 und 11 Gew.-% aus.

Die WO 98/29466 beschreibt ein monomerarmes PU-Prepolymer, dass In zwel Reaktionsschritten hergestellt wird. In einem ersten Reaktionsschritt wird ein partiell reaktionsträgen (unsymmetrisches) Diisocyanat, bevorzugt TDI, mit mehrfunktionellen Alkoholen im Verhältnis OH:NCO zwischen 4 und 0,55 umgesetzt. Nach Abreaktion praktisch aller schnellen NCO-Gruppen mit einem Teil der vorhandenen OH-Gruppen wird in einem zweiten Reaktionsschritt ein reaktiveres Dilsooyanat (symmetrisches Dilsocyanat), bevorzugt MDI, Im Unterschuss, bezogen auf die noch freien OH-Gruppen, zugesetzt.

Die WO 99/24486 beschreibt Polyurethanbindemittel mit einem niedrigen Gehalt an leichtflüchtigen monomeren Isocyanaten, wie TDI, IPDI, HDI. Dabei wird zum Aufbau des PU-Bindermittel MDI zugesetzt in einer Menge, dass nicht reagiertes MDI im Überschuss vorhanden ist, bevorzugt mehr als 5 %.

Die EP 0019120 A1 beschreibt ein Verfahren zur Herstellung elastischer, wetterbeständiger Flächengebilde unter Verwendung eines feuchtigkeitshärtenden Prepolymeren, welches durch Umsetzung von äquimolaren Mengen eines Polyols, Verringerung des Gehaltes an monomeren TDI durch Dunnschichtdestillation auf unter 1 % und anschließendem Umsetzen des Reaktionsproduktes mit Diphenylmethandiisocyanat und einem Polyol erhalten wird. Das Prepolymere weist **5** - 15 Gew.-% freie NCO-Gruppen auf.

Trotz des vorgenannten Standes der Technik besteht weiterhin Bedarf an verbesserten PU-Zusamniensetzungen mit einem niedrigen Gehalt an monomeren Polyisocyanaten, die migratfrel sind, insbesondere über eine für den jewelligen Anwendungszweok optimale Viskosität verfügen, ausreichend schnell und sicher zu verarbeiten und insbesondere für den Einsatz in der Verpackungsindustrie geeignet sind.

Die erfindungsgemäße Lösung der Aufgabe Ist den Patentansprüchen zu entnehmen.
Sie besteht im wesentlichen aus einem Polyurethan-Prepolymeren mit einem NCO-Gehalt von 2 Gew.-% bis 10 Gew.-% (nach Splegelberger, EN ISO 11909), einer OH-Zahl von 0 und einem Gehalt an monomeren Polyisocyanaten von max. 2 Gew.-%, erhältlich
A) durch Mischen von
   I) mindestens einer reaktiven urethangruppenaufwelsenden Komponente (I) die sowohl NCO-Gruppen als auch gegenüber Isocyanatgruppen reaktionsfähige funktionelle Gruppen enthält, mit
   II) mindestens einem monomerarmen, urethangruppenaufweisenden Polyisocyanat (II), wobei das monomerarme urethangruppenaufweisende Polyisocyanat (II) erhältlich ist durch Umsetzung von
      - mindestens einem monomeren Polyisocyanat mit mindestens einem Polyol im NCO : OH-Verhältnis von 2 : 1 bis 10 : 1 und anschließende Abtrennung von nichtreagiertem monomeren Polyisocyanat
         und wobei
      - der gewichtsmäßige Anteil von der reaktiven urethangruppenaufweisenden Komponente (I) im Gemisch von Komponente (I) und Polyisocyanat (II) im Bereich von 20 - 90 Gew.-% liegt,
B) sowie ggf. anschließender Reaktion der Komponenten (I) und (II).

Unter urethangruppenaufweisenden Polyisocyanaten (II) sind Verbindungen zu verstehen, zu deren Herstellung monomere Polyisocyanate und Polyole eingesetzt werden. Außer den Polyolen können noch zusätzliche, mit gegenüber Isocyanatgruppen reaktionsfähige funktionelle Gruppen tragende Verbindungen zur Herstellung der urethangruppenaufweisenden Polyisocyanate eingesetzt werden.
Die urethangruppenaufweisenden Polyisocyanate (II) weisen mindestens zwei, bevorzugt entständige, NCO-Gruppe auf.
Die Polyolkomponente kann dabei nur ein Polyol enthalten, es kann jedoch auch ein Gemisch aus zwei oder mehreren Polyolen als Polyolkomponente eingesetzt werden. Unter einem Polyol wird ein polyfunktioneller Alkohol verstanden, d.h. eine Verbindung mit mehr als einer OH-Gruppe im Molekül.

Unter "gegenüber Isocyanatgruppen reaktionsfähige funktionelle Gruppen" werden im Rahmen des vorliegenden Textes funktionelle Gruppen verstanden, die mit Isocyanatgruppen bei Temperaturen bis 200° C und ggf. unter Katalysatorzugabe unter Ausbildung mindestens einer kovalenten Bindung reagieren können.
Geeignete reaktionsfähige funktionelle Gruppen können im Sinne einer Reaktion mit Isocyanaten monofunktionell sein, beispielsweise OH-Gruppen oder Mercaptogruppen. Sie können jedoch auch gegenüber Isocyanaten difunktionell sein, beispielsweise Aminogruppen. Ein Molekül mit einer Aminogruppe weist demnach auch zwei gegenüber Isocyanatgruppen reaktionsfähige funktionelle Gruppen auf. Es ist in diesem Zusammenhang nicht notwendig, dass ein einziges Molekül zwei getrennte, gegenüber Isocyanatgruppen reaktionsfähige funktionelle Gruppen aufweist Entscheidend ist, dass das Molekül mit zwei Isocyanatgruppen unter Ausbildung jeweils einer kovalenten Bindung eine Verbindung eingehen kann.

Als Polyolkomponente kann eine Vielzahl von Polyolen eingesetzt werden. Beispielsweise sind dies aliphatische Alkohole mit 2 bis 4 OH-Gruppen pro Molekül. Die OH-Gruppen können sowohl primär als auch sekundär sein. Zu den geeigneten aliphatischen Alkoholen zählen beispielsweise Ethylenglykol, Propylenglykol, Butandiol-1,4, Pentandiol-1,5, Hexandiol-1,6, Heptandiol-1,7, Octandiol-1,8 und deren höhere Homologen oder Isomeren, wie sie sich für den Fachmann aus einer schrittweisen Verlängerung der Kohlenwasserstoffkette um jeweils eine CH₂-Gruppe oder unter Einführung von Verzweigungen in die Kohlenstoffkette ergeben. Ebenfalls geeignet sind höherfunktionelle Alkohole wie beispielsweise Glycerin, Trimethylolpropan, Pentaerythrit sowie oligomere Ether der genannten Substanzen mit sich selbst oder im Gemisch aus zwei oder mehr der genannten Ether untereinander.
Weiterhin können als Polyolkomponente Umsetzungsprodukte niedermolekularer polyfunktioneller Alkohole mit Alkylenoxiden, sogenannte Polyether, eingesetzt werden. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, Hexandiolen oder 4,4'-Dihydroxy-diphenylpropan mit Ethylenoxid, Propylenoxid oder Butylenoxid, oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole, oder Gemischen aus zwei oder mehr davon, mit den genannten Alkylenoxiden zu Polyetherpolyolen geeignet Besonders geeignet sind Polyetherpolyole mit einem Molekulargewicht von etwa 100 bis etwa 10.000, vorzugsweise von etwa 200 bis etwa 5.000. So können - je nach gewünschtem Molekulargewicht - Anlagerungsprodukte von nur wenigen Mol Ethylenoxid und/oder Propylenoxid pro Mol oder aber von mehr als hundert Mol Ethylenoxid und/oder Propylenoxid an niedermolekulare mehrfunktionelle Alkohole eingesetzt werden. Weitere Polyetherpolyole sind durch Kondensation von z.B. Glycerin oder Pentaerythrit unter Wasserabspaltung her stellbar. In der Polyurethan-Chemie gebräuchliche Polyole entstehen weiterhin durch Polymerisation von Tetrahydrofuran. Unter den genannten Polyetherpolyolen sind die Umsetzungsprodukte von mehrfunktionellen niedermolekularen Alkoholen mit Propylenoxid unter Bedingungen, bei denen zumindest teilweise sekundäre Hydroxylgruppen entstehen, besonders geeignet
Die Polyether werden in dem Fachmann bekannter Weise durch Umsetzung der Startverbindung mit einem reaktiven Wasserstoffatom mit Alkylenoxiden, beispielsweise Ethylenoxid, Propylenoxid, Butylenoxid, Styroloxid, Tetrahydrofuran oder Epichlorhydrin oder Gemischen aus zwei oder mehr davon, umgesetzt.
Geeignete Startverbindungen sind beispielsweise Wasser, Ethylenglykol, Propylenglykol-1,2 oder -1,3, Butylenglykol-1,4 oder -1,3, Hexandiol-1,6, Octandiol-1,8, Neopentylglykol, 1,4-Hydroxymethylcyclohexan, 2-Methyl-1,3-propandiol, Glycerin, Trimethylolpropan, Hexantriol-1,2,6, Butantriol-1,2,4 Trimethylolethan, Pentaerythrit, Mannitol, Sorbitol, Methylglykoside, Zucker, Phenol, Isononylphenol, Resorcin, Hydrochinon, 1,2,2- oder 1,1,2-Tris-(hydroxyphenyl)-ethan, Ammoniak, Methylamin, Ethylendiamin, Tetra- oder Hexamethylenamin, Triethanolamin, Anilin, Phenylendiamin, 2,4- und 2,6-Diaminotoluol und Polyphenylpolymethylenpolyamine, wie sie sich durch Anilin-Formaldehydkondensation erhalten lassen, oder Gemische aus zwei oder mehr davon.

Ebenfalls zum Einsatz als Polyolkomponente geeignet sind Polyether, die durch Vinylpolymere modifiziert wurden. Derartige Produkte sind beispielsweise erhältlich, in dem Styrol- oder Acrylnitril, oder deren Gemisch, in der Gegenwart von Polyethern polymerisiert werden.
Ebenfalls als Polyolkomponente sind Polyesterpolyole mit einem Molekulargewicht von etwa 200 bis etwa 10.000 geeignet. So können beispielsweise Polyesterpolyole verwendet werden, die durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton entstehen. Ebenfalls als polyfunktionelle Alkohole zur Herstellung von Polyesterpolyolen geeignet sind 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol.

Weitere geeignete Polyesterpolyole sind durch Polykondensation herstellbar. So können difunktionelle und/oder trifunktionelle Alkohole mit einem Unterschuss an Dicarbonsäuren und/oder Tricarbonsäuren, oder deren reaktiven Derivaten, zu Polyesterpolyolen kondensiert werden. Geeignete Dicarbonsäuren sind beispielsweise Adipinsäure oder Bernsteinsäure und ihre höhere Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Die genannten Säuren können einzeln oder als Gemische aus zwei oder mehr davon eingesetzt werden. Im Rahmen der Erfindung besonders geeignet sind Polyesterpolyole aus mindestens einer der genannten Dicarbonsäuren und Glycerin, welche einen Restgehalt an OH-Gruppen aufweisen. Besonders geeignete Alkohole sind Hexandiol, Ethylenglykol, Diethylenglykol oder Neopentylglykol oder Gemische aus zwei oder mehr davon. Besonders geeignete Säuren sind Isophthalsäure oder Adipinsäure oder deren Gemisch.

Polyesterpolyole mit hohem Molekulargewicht umfassen beispielsweise die Umsetzungsprodukte von polyfunktionellen, vorzugsweise difunktionellen Alkoholen (gegebenenfalls zusammen mit geringen Mengen an trifunktionellen Alkoholen) und polyfunktionellen, vorzugsweise difunktionellen Carbonsäuren. Anstatt freier Polycarbonsäuren können (wenn möglich) auch die entsprechenden Polycarbonsäureanhydride oder entsprechende Polycarbonsäureester mit Alkoholen mit vorzugsweise 1 bis 3 C-Atomen eingesetzt werden. Die Polycarbonsäuren können aliphatisch, cycloaliphatisch, aromatisch oder heterocyclisch oder beides sein. Sie können gegebenenfalls substituiert sein, beispielsweise durch Alkylgruppen, Alkenylgruppen, Ethergruppen oder Halogene. Als Polycarbonsäuren sind beispielsweise Bernsteinsäure, Adipinsäure, Korksäure, Azelainsäure, Sebacinsäure, Phthalsäure, Isophthalsäure, Terephthalsäure, Trimellithsäure, Phthalsäureanhydrid, Tetrahydrophthalsäureanhydrid, Hexahydrophthalsäureanhydrid, Tetrachlorphthalsäureanhydrid. Endomethylentetrahydrophthalsäureanhydrid, Glutarsäureanhydrid, Maleinsäure, Maleinsäureanhydrid, Fumarsäure, Dimerfettsäure oder Trimerfettsäure oder Gemische aus zwei oder mehr davon geeignet. Gegebenenfalls können untergeordnete Mengen an monofunktionellen Fettsäuren im Reaktionsgemisch vorhanden sein. Die Polyester können gegebenenfalls einen geringen Anteil an Carboxylendgruppen aufweisen. Aus Lactonen, beispielsweise auf Basis von ε-Caprolacton, auch "Polycaprolactone" genannt, oder Hydroxycarbonsäuren, beispielsweise ω-Hydroxycapronsäure, erhältliche Polyester, können ebenfalls eingesetzt werden.
Es können aber auch Polyesterpolyole oleochemischer Herkunft verwendet werden. Derartige Polyesterpolyole können beispielsweise durch vollständige Ringöffnung von epoxidierten Triglyceriden eines wenigstens teilweise olefinisch ungesättigte Fettsäure-enthaltenden Fettgemisches mit einem oder mehreren Alkoholen mit 1 bis 12 Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate. Auch die Hydroxy-funktionellen Polybutadiene, wie sie z.B. unter dem Handelsnamen "Poly-bd" erhältlich sind, können für die erfindungsgemäßen Zusammensetzungen als Polyole eingesetzt werden.

Ebenfalls als Polyolkomponente geeignet sind Polyacetale. Unter Polyacetalen werden Verbindungen verstanden, wie sie aus Glykolen, beispielsweise Diethylenglykol oder Hexandiol oder deren Gemisch mit Formaldehyd erhältlich sind. Im Rahmen der Erfindung einsetzbare Polyacetale können ebenfalls durch die Polymerisation cyclischer Acetale erhalten werden.

Weiterhin als Polyole geeignet sind Polycarbonate. Polycarbonate können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen aus zwei oder mehr davon mit Diarylcarbonaten, beispielsweise Diphenylcarbonat, oder Phosgen, erhalten werden.

Ebenfalls als Polyolkomponente geeignet sind OH-Gruppen tragende Polyacrylate.

Diese Polyacrylate sind beispielsweise erhältlich durch die Polymerisation von ethylenisch ungesättigten Monomeren, die eine OH-Gruppe tragen. Solche Monomeren sind beispielsweise durch die Veresterung von ethylenisch ungesättigten Carbonsäuren und difunktionellen Alkoholen, wobei der Alkohol in der Regel in einem leichten Überschuss vorliegt, erhältlich. Hierzu geeignete ethylenisch ungesättigte Carbonsäuren sind beispielsweise Acrylsäure, Methacrylsäure, Crotonsäure oder Maleinsäure. Entsprechende OH-Gruppen tragende Ester sind beispielsweise 2-Hydroxyethylacrylat, 2-Hydroxyethylmethacrylat, 2-Hydroxypropylacrylat, 2-Hydroxypropylacrylat, 2-Hydroxypropylmethacrylat, 3-Hydroxypropylacrylat oder 3-Hydroxypropylmethacrylat oder Gemische aus zwei oder mehr davon.

Neben der Polyolkomponente sind monomere Polyisocyanate, insbesondere Diisocyanate, wesentliche Bausteine der urethangruppenaufweisenden Polyisocyanate (II). Dabei handelt es sich um Verbindungen der allgemeinen Struktur O=C=N-X-N=C=O, wobei X ein alipathischer, alicyclischer oder aromatischer Rest ist, vorzugsweise ein aliphatischer oder alicyclischer Rest mit 4 bis 18 C-Atomen.

Beispielsweise seien als geeignete Isocyanate 1,5-Naphthylendiisocyanat, 2,4-oder 4,4-Diphenylmethandiisocyanat (MDI), hydriertes MDI (H₁₂MDI), Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die Isomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Di-isocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanato-ethylester, ferner Diisocyanate mit reaktionsfähigen Halogenatomen, wie 1-Chlormethylphenyl-2,4-diisocyanat, 1-Brommethylphenyl-2,6-diisocyanat,3,3-Bis-chloromethylether-4,4'-diphenyldiiso-cyanat genannt

Schwefelhaltige Polyisocyanate erhält man beispielsweise durch Umsetzung von 2 mol Hexamethylendiisocyanat mit 1 mol Thiodiglykol oder Dihydroxydihexylsulfid. Weitere einsetzbare Diisocyanate sind beispielsweise Trimethylhexamethylendiisocyanat, 1,4-Diisocyanatobutan, 1,12-Diisocyanatododecan und Dimerfettsäurediisocyanat. Besonders geeignet sind: Tetramethylen-, Hexamethylen, Undecan-, Dodecamethylen-, 2,2,4-Trimethylhexan-2,3,3-Trimethyl-hexamethylen, 1,3-Cyclohexan-, 1,4-Cyclohexan-, 1,3- bzw. 1,4-Tetramethylxylol-, Isophoron-, 4,4-Dicyclohexylmethan- und Lysinesterdiisocyanat. Ganz besonders bevorzugt ist das Tetramethylxylylendiisocyanat (TMXDI), insbesondere das m-TMXDI von der Fa. Cyanamid.
Als mindestens trifunktionelle Isocyanate geeignet sind Polyisocyanate, die durch Trimerisation oder Oligomerisation von Diisocyanaten oder durch Reaktion von Diisocyanaten mit polyfunktionellen hydroxyl- oder aminogruppenhaltigen Verbindungen entstehen.

Zur Herstellung von Trimeren geeignete Isocyanate sind die bereits oben genannten Diisocyanate, wobei die Trimerisierungsprodukte der Isocyanate HDI, MDI oder IPDI besonders bevorzugt sind.

Weiterhin geeignet sind blockierte, reversibel verkappte Polykisisocyanate wie 1,3,5-Tris[6-(1-methyl-propyliden-aminoxycarbonyl-amino)-hexyl]-2,4,6-trixo-hexahydro-1,3,5-triazin.

Ebenfalls zum Einsatz geeignet sind die polymeren Isocyanate, wie sie beispielsweise als Rückstand im Destillationssumpf bei der Destillation von Diisocyanaten anfallen. Besonders geeignet ist hierbei das polymere MDI, wie es bei der Destillation von MDI aus dem Destillationsrückstand erhältlich ist.

Bei der Auswahl der Polyisocyanate ist zu beachten, dass die NCO-Gruppen der Polyisocyanate unterschiedliche Reaktivität gegenüber mit Isocyanaten reaktive funktionelle Gruppe tragenden Verbindungen besitzen können. Dies trifft insbesondere auf Diisocyanate mit NCO-Gruppen in unterschiedlicher chemischer Umgebung, also auf unsymmetrische Diisocyanate zu. Es ist bekannt, dass dicyclische Diisocyanate oder allgemein symmetrische Diisocyanate in ihrer Reaktionsgeschwindigkeit höher liegen als die zweite Isocyanatgruppe unsymmetrischer bzw. monocyclischer Diisocyanate. Konkrete Beispiele sind: alle Isomeren des Toluylendiisocyanat (TDI), entweder in isomerenreiner Form oder als Mischung mehrerer Isomerer; 1-Isocyanatomethyl-3-isocyanato-1,5,5-trimethyl-diisocyanat (Isophorondiisocyanat, IPDI); 2,4-Diphenylmethandiisocyanat.

Außer den bisher genannten Polyolen können zusätzlich noch weitere, mit gegenüber Isocyanaten reaktionsfähige funktionelle Gruppen tragende Verbindungen zur Herstellung der urethangruppenaufweisenden Polyisocyanate eingesetzt werden, beispielsweise Amine aber auch Wasser. Weiter seien konkret genannt
- Bemsteinsäure-di-2-hydroxyethylamid, Bernsteinsäuredi-N-methyl-(2-hydroxyethyl)amid, 1,4-Di(2-hydroxymethylmercapto)-2,3,5,6-tetrachlorbenzol, 2-Methylen-propandiol-(1,3), 2-Methylpropandiol-(1,3), 3-Pyrrolidino-1,2-propandiol, 2-Methylenpentandiol-2,4, 3-Alkoxy-1,2-propandiol, 2-Ethylhexan-1,3-diol, 2,2-Dimethylpropandiol-1,3,1,5-Pentandiol, 2,5-Dimethyl-2,5-hexandiol, 3-Phenoxy-1,2-propandiol, 3-Benzyloxy-1,2-propandiol, 2,3-Dimethyl-2,3-butandiol, 3-(4-Methoxyphenoxy)-1,2-propandiol und Hydroxymethylbenzylalkohol;
- aliphatische, cycloaliphatische und aromatische Diamine wie Ethylendiamin, Hexamethylendiamin, 1,4-Cyclohexylendiamin, Piperazin, N-Methylpropylendiamin, Diaminodiphenylsulfon, Diaminodiphenylether, Diaminodiphenyldimethylmethan, 2,4-Diamino-6-phenyltriazin, Isophorondiamin, Dimerfettsäurediamin, Diaminodiphenylmethan, Aminodiphenylamin oder die Isomeren des Phenylendiamins;
- weiterhin auch Carbohydrazide oder Hydrazide von Dicarbonsäuren;
- Aminoalkohole wie Ethanolamin, Propanolamin, Butanolamin, N-Methyl-ethanolamin, N-Methyl-isopropanolamin, Diethanolamin, Triethanolamin sowie höhere Di- oder Tri(alkanolamine);
- aliphatische, cycloaliphatische, aromatische und heterozyklische Mono- und Diaminocarbonsäuren wie Glycin, 1- und 2-Alanin, 6-Aminocapronsäure, 4-Aminobuttersäure, die isomeren Mono- und Diaminobenzoesäuren sowie die isomeren Mono- und Diaminonaphthoesäuren.

Unter reaktiver urethangruppenaufweisender Komponente (I) wird im Sinne der Erfindung verstanden, dass sie sowohl mindestens eine Urethan-Struktureinheit aufweist als auch mindestens eine, bevorzugt zwei oder mehr, reaktive funktionelle Gruppen enthält, die bei Temperaturen von -5° C bis 200°C, ggf. unter Einwirkung von Katalysatoren, mit anderen funktionellen Gruppen unter Ausbildung einer kovalenten Bindung reagieren können.
Bevorzugte funktionelle Gruppen im Rahmen der Erfindung sind gegenüber Isocyanatgruppen reaktionsfähige funktionelle Gruppen, wie beispielsweise -OH;-SH; -NH₂; >NH; oder Gruppen wie beispielsweise NCO- oder Epoxid-Gruppen.

### Komponente (I) enthält

- als Komponente (Ia) sowohl NCO-Gruppen als auch gegenüber NCO-Gruppen reaktionsfähige Gruppen,
- als Komponente (Ib) NCO-Gruppen,
- als Komponente (Ic) gegenüber Isocyanatgruppen reaktionsfähige Gruppen.

Nach (A) Mischen der reaktiven urethangruppenaufweisenden Komponente (I) mit mindestens einem monomerarmen, urethangruppenaufweisenden Polyisocyanat (II) findet (B) eine anschließende Reaktion der Komponenten (Ia) und/oder (Ic) mit (II) statt.

Die reaktive urethangruppenaufweisende Komponente (I) enthält als Komponente (Ia) sowohl NCO-Gruppen als auch gegenüber Isocyanatgruppen reaktionsfähige, funktionelle Gruppen. Komponente (Ia) wird hergestellt, indem man mindestens ein unsymmetrisches monomeres Polyisocyanat, ausgewählt aus der Gruppe: alle Isomeren des Toluylendiisocyanat (TDI), entweder in isomerenreiner Form oder als Mischung mehrerer Isomerer, 1-Isocyanatomethyl-3-isocyanato-1,5,5-trimethyl-diisocyanat (Isophorondiisocyanat, IPDI); 2,4-Diphenylmethandiisocyanat mit mindestens einer gegenüber Isocyanatgruppen reaktive funktionelle Gruppen tragenden Verbindung, bevorzugt mit mindestens einem Polyol, umsetzt. Die Umsetzung erfolgt dabei im Verhältnis NCO zu OH zwischen 1,05 bis 1,8:1. Das Reaktionsende ist erreicht, wenn die reaktiveren NCO-Gruppen des monomeren Polyisocyanats praktisch vollständig mit einem Teil der verfügbaren gegenüber Isocyanatgruppen reaktiven funktionellen Gruppen reagiert haben, aber eine Reaktion der weniger reaktiven NCO-Gruppen noch nicht oder nicht wesentlich stattgefunden hat. Dieser Reaktionszeitpunkt läßt sich durch analytische Verfolgung des Reaktionsgeschehens bestimmen. Das Reaktionsgeschehen kann dabei spektroskopisch (IR) oder titrimetrisch verfolgt werden. Die Einsatzmolverhältnisse werden so gewählt, dass nach Abreaktion der reaktiveren Isocyanatgruppen noch freie, gegenüber Isocyanatgruppen reaktive funktionelle Gruppen, bevorzugt OH-Gruppen, vorliegen. Die so erhaltene Komponente (Ia) ist durch eine molare Masse von 500 bis 20 000 g/mol, bestimmt durch Gelpermeationschromatografie (GPC), charakterisiert. Bei einer Temperatur von 20 °C bis 100 °C liegt die Viskosität von (Ia) im Bereich von 500 bis 25 000 mPas, bestimmt nach Brookfield (ISO 2555). Das heißt, bei 20 °C wird eine Viskosität von 500 mPas nicht unterschritten und bei 100 °C eine Viskosität von 25 000 mPas nicht überschritten. Der NCO-Gehalt liegt im Bereich von 1 bis 10 Gew.-%, bestimmt nach Spiegelberger (EN ISO 11909). Im Falle einer Umsetzung des unsymmetrischen monomeren Polyisocyanats mit mindestens einem Polyol liegt die Hydroxylzahl von (Ia) im Bereich von 5 bis 50, gemessen nach ISO 4326.

Die reaktive urethangruppenaufweisende Komponente (I) enthält als Komponente (Ib) NCO-Gruppen und ist erhältlich, indem man mindestens ein monomeres Polyisocyanat mit mindestens einer gegenüber Isocyanatgruppen reaktive funktionelle Gruppen tragenden Verbindung, bevorzugt mit mindestens einem Polyol, umsetzt. Die Umsetzung erfolgt dabei im Verhältnis NCO zu OH von 1,05:1 bis 3:1, bevorzugt von 1,05:1 bis 2:1 und insbesondere bevorzugt von 1,05:1 bis 1,2:1. Das Reaktionsende ist erreicht, wenn praktisch vollständig die gegenüber Isocyanatgruppen reaktiven funktionellen Gruppen reagiert haben. Dieser Reaktionszeitpunkt läßt sich durch analytische Verfolgung des Reaktionsgeschehens bestimmen. Das Reaktionsgeschehen kann dabei spektroskopisch (IR) oder titrimetrisch verfolgt werden.

Die so erhaltene reaktive urethangruppenaufweisende Komponente (Ib) ist durch eine molare Masse von 500 bis 20 000 g/mol, bestimmt durch Gelpermeationschromatografie (GPC), charakterisiert. Bei einer Temperatur von 20 °C bis 100 °C liegt die Viskosität von (Ib) im Bereich von 500 bis 25 000 mPas bestimmt nach Brookfield (ISO 2555).
Das heißt, bei 20 °C wird eine Viskosität von 500 mPas nicht unterschritten und bei 100 °C eine Viskosität von 25 000 mPas nicht überschritten. Der NCO-Gehalt liegt im Bereich von 1 bis 10 Gew.-%, bestimmt nach Spiegelberger (EN ISO 11909). Die OH-Zahl beträgt Null und die Monomerkonzentration ist größer als 0,5 Gew.-%, bevorzugt größer als 1 Gew.-% und insbesondere bevorzugt größer als 2 Gew.-%.
Die Monomerkonzentration ist kleiner als 30 Gew.-%, bevorzugt kleiner als 20 Gew.-% und insbesondere bevorzugt kleiner als 10 Gew.-%.

Als urethangruppenaufweisende Komponente (I) wird ferner Komponente (Ic) eingesetzt, enthaltend gegenüber Isocyanatgruppen reaktionsfähige funktionelle Gruppen. Komponente (Ic) wird hergestellt indem man mindestens ein monomeres Polyisocyanat mit mindestens einer gegenüber Isocyanaten reaktive funktionelle Gruppen tragende Verbindung, bevorzugt mit mindestens einem Polyol, im Verhältnis NCO zu OH zwischen 0,1 bis 0,8:1 umsetzt, bis die Isocyanat-Gruppen praktisch vollständig reagiert haben. Dieser Reaktionszeitpunkt läßt sich durch analytische Verfolgung des Reaktionsgeschehens bestimmen. Das Reaktionsgeschehen kann dabei spektroskopisch (IR) oder titrimetrisch verfolgt werden.
Die so erhaltene Komponente (Ic), enthaltend gegenüber Isocyanatgruppen reaktionsfähigen funktionellen Gruppen, läßt sich durch eine molare Masse von 500 bis 20 000 g/mol, bestimmt durch Gelpermeationschromatographie (GPC), charakterisieren. In einem Temperaturbereich von 20 °C bis 100 °C liegt die Viskosität von (Ic) im Bereich von 500 bis 25 000 mPas, bestimmt nach Brookfield (ISO 2555). Das heißt, bei 20 °C wird eine Viskosität von 500 mPas nicht unterschritten und bei 100 °C eine Viskosität von 25 000 mPas nicht überschritten. Die Hydroxyl- bzw. (OH)-Zahl, bestimmt nach ISO 4326, liegt im Bereich von 5 bis 50. Der NCO-Gehalt beträgt Null Gew.-%.

Das monomerarme, urethangruppenaufweisende Polyisocyanat (II) wird hergestellt durch Umsetzung von mindestens einem monomeren Polyisocyanat mit mindestens einem Polyol, bevorzugt mit mindestens einem Diol. Um die Bildung höhermolekularer Oligomerer zu vermeiden, wird zweckmäßigerweise ein hoher stöchiometrischer Überschuss an Polyisocyanaten im Verhältnis zu den Polyolen gewählt. Bevorzugt wird ein NCO:OH-Verhältnis 2:1 bis 10:1, insbesondere wird ein NCO:OH-Verhältnis von 3:1 bis 7:1 bevorzugt. Die OH-Zahl des Polyisocyanats (II) beträgt Null.
Als monomere Polyisocyanate werden bevorzugt symmetrische Diisocyanate und besonders bevorzugt dicyclische Diisocyanate eingesetzt.
Mit "monomerenarm" ist eine niedrige Konzentration der monomeren Polyisocyanate im Polyisocyanat (II) zu verstehen. Die Konzentration dieser sogenannten "Restmonomere" liegt unter einem, vorzugsweise zwischen 0 und 0,5 Gew.-%, besonders bevorzugt zwischen 0 und 0,2 Gew.-%, bezogen auf das urethangruppenaufweisende Polyisocyanat (II).
Die Monomerenarmut wird erreicht, indem nach erfolgter Umsetzung von Polyisocyanat mit Polyol aus dem Reaktionsprodukt das monomere Polyisocyanat entfernt wird. Der Reinigungsschritt kann nach an sich bekannten Verfahren, wie Destillations-, Extraktions-, Chromatographie- oder Kristallisation-Verfahren einzeln oder ggf. in Kombination der aufgeführten Verfahren erfolgen.
Bei der Verwendung von niederen Alkandiolen hat es sich bewährt, die geringe Löslichkeit des urethangruppenaufweisenden Polyisocyanats (II) in einigen Lösungsmitteln auszunutzen, in dem nach Abschluss der Diol/Diisocyanat-Reaktion ein Nichtlöser für das urethangruppenaufweisende Polyisocyanat (II) zugefügt wird, der gleichzeitig Löser für das monomere Diisocyanat ist. Dadurch wird das urethangruppenaufweisende Polyisocyanat aus dem Reaktionsgemisch ausgefällt und durch Filtration oder durch Zentrifugieren von nicht umgesetzten monomerem Diisocyanat befreit. Dieses Verfahren ist insbesondere anzuwenden, wenn die schwerer flüchtigen monomeren Diisocyanate wie beispielsweise das MDI Verwendung finden sollen. Nichtlöser sind dabei insbesondere unpolare aprotische organische Lösungsmittel wie z.B. Ethylacetat, Chlorbenzol, Xylole, Toluol, oder insbesondere Siedegrenzenbenzine.

Bei der Verwendung von flüchtigen monomeren Diisocyanaten wie z.B. TDI, MDI, TMXDI, IPDI, XDI kann das überschüssige monomere Diisocyanat auch destillativ aus dem Reaktionsgemisch entfernt werden. Hierzu erfolgt die Destillation vorzugsweise im Vakuum mit Hilfe eines Dünnschichtverdampfers oder eines Dünnfilmverdampfers. Derartige Destillationsverfahren sind z.B. im Kunststoff- Handbuch Band 7, "Polyurethane", G.W. Becker (Herausgeber), Hanser-Verlag, München, 3. Auflage 1993, Seite 425 beschrieben.

Eine weitere Möglichkeit der Entfernung des monomeren Diisocyanates aus dem Reaktionsgemisch ist die selektive Extraktion des monomeren Diisocyanates, beispielsweise unter Verwendung von überkritischem Kohlendioxyd oder anderen überkritischen aprotischen Lösungsmitteln. Dieses Extraktionsverfahren ist beispielsweise aus der WO-97/46603 bekannt.

Das erfindungsgemäße Polyurethan-Prepolymer wird hergestellt, indem
- in einem ersten Reaktionsschritt mindestens eine reaktive urethangruppenaufweisende Komponente (I) als
   a) als Komponente (la) hergestellt wird, indem man mindestens ein unsymmetrisches monomeres Polyisocyanat mit mindestens einer, gegenüber Isocyanaten reaktive funktionelle Gruppen tragende Verbindung im Verhältnis NCO:OH zwischen 1,05 bis 1,8:1 umsetzt, bis die reaktiveren NCO-Gruppen des monomeren Polyisocyanats praktisch vollständig mit einem Teil der verfügbaren, gegenüber Isocyanat-Gruppen reaktiven funktionellen Gruppen reagiert haben und/oder
   b) eine Komponente (Ib) hergestellt wird, indem man mindestens ein monomeres Polyisocyanat mit mindestens einer, gegenüber Isocyanatgruppen reaktive funktionelle Gruppen tragenden Verbindung, bevorzugt mit mindestens einem Polyol, im Verhältnis NCO:OH zwischen 1,05 bis 3:1 umsetzt, bis praktisch vollständig die gegenüber Isocyanatgruppen reaktiven funktionellen Gruppen reagiert haben und/oder
   c) eine Komponente (Ic) hergestellt wird, indem man mindestens ein monomeres Polyisocyanat mit mindestens einer, gegenüber Isocyanaten reaktive funktionelle Gruppen tragenden Verbindung, im Verhältnis NCO:OH zwischen 0,1 bis 0,8:1 umsetzt, bis praktisch vollständig die Isocyanatgruppen reagiert haben;
- in einem zweiten Schritt mindestens ein monomerarmes, urethangruppenaufweisende Polyisocyanat (II) hergestellt wird, durch Umsetzung von mindestens einem monomeren Polyisocyanat mit mindestens einem Polyol im NCO:OH-Verhältnis 2:1 bis 10:1 mit anschließender Abtrennung von nicht reagiertem monomeren Polyisocyanat und anschließend
   die reaktive urethangruppenaufweisende Komponente (I) und Polyisocyanat (II) mischt, wobei im Fall a) und c) das monomerarme, urethangruppenaufweisende Polyisocyanat (II) im Überschuss, bezogen auf die noch freien, gegenüber Isocyanat reaktiven funktionellen Gruppen der urethangruppenaufweisenden Komponente (la) oder (Ic) zusetzt und reagieren lässt und wobei
   die Herstellung der Komponenten (I), (II) und der Reaktionsprodukte aus (la) und (Ic) mit (II) in jeder dem Fachmann bekannten Weise nach den allgemeinen Regeln der Polyurethanherstellung erfolgen kann.

Der gewichtsmäßige Anteil von der reaktiven urethangruppenaufweisenden Komponente (I) im (Reaktions)-Gemisch von (I) mit Polyisocyanat (II) liegt im Bereich von 20 bis 90 Gew.-%, bevorzugt im Bereich 50 bis 90 Gew.-% und insbesondere bevorzugt im Bereich von 70 bis 90 Gew.-%.

Die Herstellung von reaktiver urethangruppenaufweisender Komponente (I) und Polyisocyanat (II) sowie die Umsetzung von (la) und/oder (Ic) mit (II) kann beispielsweise in Gegenwart von Lösemitteln erfolgen. Als Lösemittel sind grundsätzlich alle üblicherweise in der Polyurethanchemie benutzten Lösemittel verwendbar, insbesondere Ester, Ketone, halogenierte Kohlenwasserstoffe, Alkane, Alkene und aromatische Kohlenwasserstoffe. Beispiele für solche Lösemittel sind Methylenchlorid, Trichlorethylen, Toluol, Xylol, Butylacetat, Amylacetat, Isobutylacetat, Methylisobutylketon, Methoxybutylacetat, Cyclohexan, Cyclohexanon, Dichlorbenzol, Diethylketon, Di-isobutylketon, Dioxan, Ethylacetat, Ethylenglykolmonobutyletheracetat, Ethylenglykolmonoethylacetat, 2-Ethylhexylacetat, Glykoldiacetat, Heptan, Hexan, Isobutylacetat, Isooctan, Isopropylacetat, Methylethylketon, Tetrahydrofuran oder Tetrachlorethylen oder Mischungen aus zwei oder mehr der genannten Lösemittel.

Wenn die (Reaktions-)Komponenten selbst flüssig sind oder wenigstens eine oder mehrere der (Reaktions-)Komponenten eine Lösung oder Dispersion weiterer, ausreichend flüssiger (Reaktions-)Komponenten bilden, so kann auf den Einsatz von Lösemitteln ganz verzichtet werden. Eine solche lösemittelfreie Reaktion ist im Rahmen der vorliegenden Erfindung bevorzugt.

Zur Beschleunigung der Reaktion zur Herstellung der Komponente (I), (II) und ggf. dem Reaktionsprodukt von (la) oder (Ic) mit (II) wird üblicherweise die Temperatur erhöht. In der Regel wird auf etwa 40 bis etwa 80 °C temperiert. Die einsetzende, exotherme Reaktion sorgt anschließend für ein Ansteigen der Temperatur. Die Temperatur des Ansatzes wird bei etwa 70 bis etwa 110 °C beispielsweise bei etwa 85 bis 95 °C oder insbesondere bei etwa 75 bis etwa 85 °C gehalten, gegebenenfalls erfolgt die Einstellung der Temperatur durch geeignete äußere Maßnahmen, beispielsweise Heizen oder Kühlen.

Gegebenenfalls können zur Beschleunigung der Reaktion in der Polyurethanchemie übliche Katalysatoren zum Reaktionsgemisch zugesetzt werden. Bevorzugt ist die Zugabe von Dibutylzinndilaurat oder Diazabicyclooctan (DABCO). Wenn ein Katalysatoreinsatz gewünscht ist, wird der Katalysator in der Regel in einer Menge von etwa 0,005 Gew.-% oder etwa 0,01 Gew.-% bis etwa 0,2 Gew.-%, bezogen auf den gesamten Ansatz, dem Reaktionsgemisch zugegeben.

Die Reaktionsdauer hängt von der eingesetzten Polyolkomponente, vom eingesetzten monomeren Polyisocyanat, weiteren Verbindungen mit gegenüber Isocyanatgruppen reaktiven funktionellen Gruppen, von der Reaktionstemperatur sowie vom gegebenenfalls vorhandenen Katalysator ab. Üblicherweise beträgt die Gesamtreaktionsdauer etwa 30 Minuten bis etwa 20 Stunden.

Das Mischen der reaktiven urethangruppenaufweisenden Komponente (I), insbesondere Komponente (Ib) mit Polyisocyanat (II) bis zur Homogenität erfolgt bei einer Temperatur von 20 °C bis 100 °C, bevorzugt zwischen 40 °C und 80 °C, gegebenenfalls unter Zusatz der bereits beschriebenen Lösungsmittel und gegebenenfalls in einer Inertgasatmosphäre.

In einer besonderen Ausführungsform sind die Edukte für die Herstellung der reaktiven urethangruppenaufweisenden Komponente (I) und des Polyisocyanats (II) identisch, insbesondere wenn als urethangruppenaufweisende Komponente (I) die NCO-Gruppen enthaltene Komponente (Ib) verwendet wird. In dieser Ausführungsform wird zuerst Komponente (Ib) hergestellt und nach Erreichen eines gewünschten NCO-Wertes oder einer gewünschten Viskosität 20 bis 90 Gew.-% der Ansatzmenge entnommen. Zur verbleibenden Menge wird erneut monomeres Polyisocyanat bis zu einem NCO:OH-Verhältnis 2:1 bis 10:1 zugegeben und die Reaktion bis zum Erreichen eines gewünschten NCO-Wertes oder einer gewünschten Viskosität fortgeführt. Anschließend erfolgt die Abtrennung von nicht reagiertem monomeren Polyisocyanat nach mindestens einem der beschriebenen Verfahren oder in Kombination dieser Verfahren. Zu dem so erhaltenen monomerarmen urethangruppenaufweisenden Polyisocyanat (II) wird die vorher entnommene Menge der reaktiven urethangruppenaufweisenden Komponente (Ib) zugemischt.

Der besondere Vorteil des erfindungsgemäßen Polyurethan-Prepolymeren ist, dass je nach gewünschter Anwendung in der Viskosität maßgeschneiderte, monomerarme, im Falle der Umsetzung von Komponente (Ic), enthaltend gegenüber Isocyanat-Gruppen reaktionsfähige funktionelle Gruppen, sogar monomerfreie PU-Prepolymere, mit einem hohen Isocyanat-Gehalt hergestellt werden können, indem die NCO-Endgruppen eines niedrigviskosen, monomerarmen Reaktionsmedium, dem urethangruppenaufweisenden Polyisocyanat (II) mit
a) noch vorhandenen gegenüber Isocyanatgruppen reaktiven funktionellen Gruppen eines höhermolekularen Reaktionsmediums, der Komponente (la) oder (Ic), zur Reaktion gebracht werden und/oder
b) mit der Komponente (Ib) gemischt werden.

Das erfindungsgemäße Polyurethan-Prepolymer mit freien Isocyanat-Gruppen und niedrigem Gehalt an monomeren Polyisocyanat weist vorzugsweise einen Gehalt an monomeren Polyisocyanaten von weniger als 2 Gew.-% oder weniger als 1 Gew.-% oder bevorzugt weniger als 0,5 Gew.-% auf. Diese Grenzen gelten insbesondere für leicht-flüchtige Isocyanatverbindungen, die nur ein beschränktes Gefährdungspotential für mit ihrer Verarbeitung beschäftigte Personen aufweisen, beispielsweise für Isophorondiisocyanat (IPDI), Hexamethylendiisocyanat (HDI), Tetramethylxylylendiisocyanat (TMXDI) oder Cyclohexandiisocyanat Bei bestimmten leicht-flüchtigen Isocyanatverbindungen, insbesondere solchen, die ein hohes Gefährdungspotential für mit ihrer Verarbeitung beschäftigte Personen aufweisen, beträgt deren Gehalt in der erfindungsgemäßen PU-Prepolymeren-Zusammensetzung bevorzugt weniger als 0,3 Gew.-% und besonders bevorzugt weniger als 0,1 Gew.-%. Zu den letztgenannten Isocyanatverbindungen gehört insbesondere Toluylendiisocyanat (TDI). In einer weiteren, bevorzugten Ausführungsform der Erfindung weist das Polyurethan-Prepolymer einen Gehalt an monomeren Polyisocyanat, insbesondere MDI und/oder TDI, von weniger als 0,07 Gew.-% auf.

Das so hergestellte Polyurethan-Prepolymer mit niedrigem Gehalt an monomeren Polyisocyanat wird zweckmäßigerweise zusammen mit üblichen Härtern und/oder Feuchtigkeit, gewünschtenfalls in Gegenwart von organischen Lösemitteln und üblichen Beschleunigern und Additiven, zum Verkleben von Kunststoffen, Metallen und Papieren verwendet, insbesondere von Folien und insbesondere im Bereich der flexiblen Verpackung, wobei die Verklebung vorzugsweise bei Temperaturen zwischen 20 und 120 °C stattfindet.

Das erfindungsgemäße Polyurethan-Prepolymer zeichnet sich durch folgende positiven bzw. vorteilhaften Eigenschaften aus:
- Die Viskosität liegt insbesondere für die flexible Verpackung in einem niedrigen Bereich, worunter eine Viskosität (gemessen nach Brookfield, ISO 2555) verstanden wird, die bei 100 °C 100 mPas bis 25 000 mPas, bevorzugt 200 mPas bis 10 000 mPas und insbesondere 250 bis 5 000 mPas beträgt
- Der Isocyanatgehalt ist hoch und liegt im Bereich von 1 bis 10 Gew.-%, bevorzugt im Bereich von 2 bis 7 Gew.-%.
- Der Monomerengehalt an nicht umgesetzten monomeren Polyisocyanat, allgemein auch als Restmonomergehalt bezeichnet, kann deutlich unter 1 Gew.-% liegen.
- Es treten keine Antisiegeleffekte auf.
- Es.verfügt über völlige Migratfreiheit.

Die Migratfreiheit wird folgendermaßen festgestellt (siehe Deutsche Lebensmittel-Rundschau, 87 (1991), Seiten 280 und 281): Ein verschweißter Flachbeutel wird mit 3 %iger Essigsäure gefüllt bei 70°C gelagert. Der Beutelinhalt wird nach 2 h Lagerzeit diazotiert, einer Azokupplung unterzogen und an einer C₁₈-Säule aufkonzentriert. Anschließend wird photometrisch die Konzentration bestimmt Die Migration von nicht flüchtigen Diisocyanaten und anderen Verbindungen kann zu Störungen führen, z.B. beim Versiegeln verklebter Folienverbunde, insbesondere bei CPA/EVA-Laminaten.

Die erfindungsgemäßen PU-Prepolymeren eignen sich in Substanz oder als Lösung in organischen Lösungsmitteln zum Verkleben von Kunststoffen, Metallen und Papieren, insbesondere zum Kaschieren von Aluminium und Kunststoff-Folien sowie Metall- bzw. Oxid-bedampften Folien und Papieren. Hierbei können übliche Härter, etwa mehrfunktionelle höhermolekulare Alkohole zugesetzt werden (2-Komponenten-Systeme) oder aber Oberflächen mit definiertem Feuchtigkeitsgehalt mit den erfindungsgemäßen Produkten direkt verklebt werden. Mit den erfindungsgemäßen Produkten hergestellte Folienverbunde zeigen hohe Verarbeitungssicherheit beim Heißsiegeln. Dies ist möglicherweise auf den stark verminderten Anteil migrationsfähiger niedermolekularer Produkte in den Prepolymeren zurückzuführen.

Die Erfindung wird nun anhand von Beispielen im einzelnen erläutert:

### I Herstellung und Eigenschaften der PU-Prepolymeren

### 1.1 Beispiel A

### Herstellung der Komponente (Ia):

In einer dem Fachmann bekannten Apparatur wurde ein Gemisch aus 34 Gew.-% eines Polyesterdiols, bestehend aus Adipinsäure, Diethylenglykol und Dipropylenglykol (OHZ =135) und 16 Gew.-% eines Polyetherdiols (OHZ = 188), bei 80 °C entwässert. Nach dem Abkühlen auf 40 °C wurde das entwässerte Polyester-/Polyether-Gemisch mit 17 Gew.-% TDI (Desmodur T 100, Bayer AG) versetzt (Additionsverhältnis beträgt in dieser Stufe 1,05 bis 1,6:1), wobei die Reaktionstemperatur 70 °C nicht übersteigen durfte. Das Reaktionsende wurde mit einem NCO-Titrationswert von 3,4 % erreicht.

### Weiterverabeitung:

In einer 2. Stufe wurden 33 Gew.-% des monomerarmen, urethangruppenaufweisenden Polyisocyanats (II) zugesetzt:

### Herstellung des monomerarmen, urethangruppenaufweisenden Polyisocyanats(II):

In einer dem Fachmann bekannten Apparatur wurde ein Polyetherdiol (OHZ = 130) auf 40 °C erwärmt und mit 4,4'-Diphenylmethandiisocyanat (MDI, Desmodur. 44M, Bayer AG) im NCO:OH-Verhältnis von 3:1 vermischt und unter Rühren aufgeheizt, wobei die Reaktionstemperatur 80 °C nicht übersteigen durfte. Nach der üblichen Nachrührzeit (z. B. bei einem 2 kg Ansatz 1,5 bis 2 Stunden) wurde das restliche MDI mit einer Dünnschichtdestillationsapparatur abdestilliert. Nach der Destillation betrug der NCO-Titrationswert 6,1 %.

### Reaktion von Komponente (Ia) mit dem monomerarmen, urethangruppenaufweisenden Polyisocyanat (II):

In einer dem Fachmann bekannten Apparatur wurde oben hergestellte Komponente (la) mit dem monomerarmen, urethangruppenaufweisenden Polyisocyanat (II) in den oben angegebenen Gewichtsverhältnissen vermischt (Additionsverhältnis beträgt in dieser Stufe 0,15 bis 0,55:1) und unter Rühren aufgeheizt, wobei die Reaktionstemperatur 80 °C nicht übersteigen durfte.

Das Reaktionsende wurde mit einem NCO-Titrationswert von 4,4 % (theor. Wert: 4,3 %) erreicht.

Die Viskosität, gemessen nach Brookfield, Spindel 27, 30 Upm, 70 °C, betrug 4520 mPas.

Der Gehalt an freiem monomeren Polyisocyanat lag bei 0,06 Gew.-% TDI und unter 0,02 Gew.-% MDI.

### 1.2 Beispiel B

### Herstellung von Komponente (Ia):

In einer dem Fachmann bekannten Apparatur wurde ein Gemisch aus 32,5 Gew.-% eines Polyesterdiols, bestehend aus Adipinsäure, Isophthalsäure, Phthalsäure, Diethylenglykol und Dipropylenglykol (OHZ =130) und 32,5 Gew.-% eines Polyetherdiols (OHZ = 188), bei 80 °C entwässert. Nach dem Abkühlen auf 40 °C wurde das entwässerte Polyester-/Polyether-Gemisch mit 22 Gew.-% TDI (Desmodur T 100, Bayer AG) versetzt (Additionsverhältnis beträgt in dieser Stufe 1,26 bis 1,66:1), wobei die Reaktionstemperatur 75 °C nicht übersteigen durfte. Das Reaktionsende wurde mit einem NCO-Titrationswert von 3,8 % erreicht.
In einer 2. Stufe wurden 12 Gew.-% des monomerarmen, urethangruppenaufweisenden Polyisocyanats (II) zugesetzt:

### Herstellung des monomerarmen, urethangruppenaufweisenden Polyisocyanats(II):

In einer dem Fachmann bekannten Apparatur wurde ein Polyetherdiol (OHZ = 130) auf 40 °C erwärmt und mit 4,4'-Diphenylmethandiisocyanat (MDI, Desmodur 44M, Fa. Bayer AG) im Verhältnis NCO:OH von 3:1 vermischt und unter Rühren aufgeheizt, wobei die Reaktionstemperatur 80 °C nicht übersteigen durfte. Nach der üblichen Nachrührzeit (z. B. bei einem 2 kg Ansatz 1,5 bis 2 Stunden) wurde das restliche MDI mit einer Dünnschichtdestillationsapparatur abdestilliert. Nach der Destillation betrug der NCO-Titrationswert 6,1 %.

### Reaktion von Komponenten (Ia) mit dem monomerarmen, urethangruppenaufweisenden Polyisocyanat (II):

In einer dem Fachmann bekannten Apparatur wurde oben hergestellte Komponente (la) mit dem monomerarmen, urethangruppenaufweisenden Polyisocyanat (II) in den oben angegebenen Gewichtsverhältnissen vermischt (Additionsverhältnis beträgt in dieser Stufe 0,1:1) und unter Rühren aufgeheizt,
wobei die Reaktionstemperatur 80 °C nicht übersteigen durfte.
Das Reaktionsende wurde mit einem NCO-Titrationswert von 4,1 % (theor. Wert: 4,1 %) erreicht.
Die Viskosität, gemessen nach Brookfield, Spindel 27, 30 Upm, 70 °C, betrug 4900 mPas.
Der Gehalt an freiem monomeren Polyisocyanat lag unter 0,02 Gew.-% MDI und unter 0,02 Gew.-% TDI.

### I.3 Vergleichsbeispiel 1

In einem Dreihalskolben, versehen mit Rührer, Thermometer und Trockenrohr, wurden 575,3 g eines Polypropylenglykols (OHZ = 109) und 156,9 g eines Polypropylenglykols (OHZ = 267) mit 238,5 g 2,4-Toluylendiisocyanat vermischt und unter Rühren aufgeheizt. Vor Erreichen einer Massetemperatur von 90 °C ab war nach einer halben Stunde ein NCO-Titrationswert von 4,5 % unwesentlich unterschritten. Nach Zugabe von 28 g 4,4'-Diphenylmethandiisocyanat wurde bei 90 °C zwei Stunden lang weitergerührt, wonach ein NCO-Gehalt von 4,57 % (theor. 4,59 %) erreicht war.

| | |
|---|---|
| %-monomeres TDI: 0,03 | % NCO: 4,57 (theor. 4,59) |
| % monomeres MDI: 0,2 | OH/NCO (Stufe 1) = 0,68:1 |

OH/NCO (Stufe 2) = 10:1, bezogen auf Rest OH aus Stufe 1

Die Viskosität, gemessen nach Brookfield, Spindel 27, 30 Upm, 70 °C, betrug 1000 mPas.

### 1.4 Vergleichsbeispiel 2

In einem Dreihalskolben, versehen mit Rührer, Thermometer und Trockenrohr, wurden 411,7 g eines Polypropylenglykols (OHZ = 109) mit 104,4 g 2,4-Toluylendiisocyanat vermischt und unter Rühren aufgeheizt. Vor Erreichen einer Massetemperatur von 90 °C ab war nach einer halben Stunde ein NCO-Titrationswert von 4,56 % erreicht, womit der theoretische Wert von 4,88 % unwesentlich unterschritten war. Nach Zugabe von 25 g 4,4'-Diphenylmethandiisocyanat wurde bei 90 °C zwei Stunden lang weitergerührt, wonach ein NCO-Gehalt von 4,61 % (theor. 4,65 %) erreicht war.

| | |
|---|---|
| %-monomeres TDI: 0,03 | % NCO: 4,7 (theor. 4,77) |
| % monomeres MDI: 2,5 | OH/NCO (Stufe 1) = 1:1 |

OH/NCO (Stufe 2) 1:1,6, bezogen auf Rest OH aus Stufe 1.
Die Viskosität, gemessen nach Brookfield, Spindel 27, 30 Upm, 60 °C, betrug 1980 mPas.

### 1.5 Beispiel C

### Herstellung von Komponente (Ib):

In einer dem Fachmann bekannten Apparatur wurden 63,5 Gew.-% eines Polyetherdiols (OHZ = 188) bei 80 °C entwässert. Nach dem Abkühlen auf 40 °C wurde das entwässerte Polyetherdiol mit 36,5 Gew.-% TDI (Desmodur T 100, Fa. Bayer AG) versetzt (Additionsverhältnis beträgt in dieser Stufe 3:1), wobei die Reaktionstemperatur 80 °C nicht übersteigen durfte. Das Reaktionsende wurde mit einem NCO-Titrationswert von 8,8 % (theor.: 8,8 %) erreicht

### Herstellung des monomerarmen, urethangruppenaufweisenden Polyisocyanats(II):

In einer dem Fachmann bekannten Apparatur wurde ein Polyetherdiol (OHZ = 130) auf 40 °C erwärmt und mit 4,4'-Diphenylmethandiisocyanat (MDI, Desmodur 44 M, Fa. Bayer AG) im Verhältnis NCO: OH von 3:1 vermischt und unter Rühren aufgeheizt, wobei die Reaktionstemperatur 80 °C nicht übersteigen durfte. Nach der üblichen Nachrührzeit (z. B. bei einem 2 kg Ansatz 1,5 bis 2 Stunden) wurde das restliche MDI mit einer Dünnschichtdestillationsapparatur abdestilliert. Nach der Destillation betrug der NCO-Titrationswert 6,1 %.

### Herstellen der Mischung aus Komponente (Ib) und dem monomerarmen, urethangruppenaufweisenden Polyisocyanat (II):

In einer dem Fachmann bekannten Apparatur wurden 80 Gew.-% oben hergestellter Komponente (Ib) mit 20 Gew.-% des monomerarmen, urethangruppenaufweisenden Polyisocyanat (II) vermischt und unter Rühren und Erhitzen homogenisiert, wobei die Mischungstemperatur 70 °C nicht übersteigen durfte.
Die homogene Mischung hatte einem NCO-Titrationswert von 8,2 % (theor. 8,3 %).
Die Viskosität, gemessen nach Brookfield, Spindel 27, 30 Upm, 50 °C, betrug 5 000 mPas.
Der Gehalt an freiem monomeren Polyisocyanat lag unter 0,02 Gew.-% (MDI-Monomerengehalt), bzw. bei 0,7 Gew.-% (TDI-Monomerengehalt).

### 1.6 Beispiel D

### Herstellung Komponente (Ic)

In einer dem Fachmann bekannten Apparatur wurden 32 Gew.-% eines Polyesterdiols, bestehend aus Adipinsäure, Diethylenglykol, Dipropylenglykol, Isophthalsäure und Phthalsäure (OHZ =125), bei 80 °C entwässert. Nach dem Abkühlen auf 40 °C wurde das entwässerte Polyestergemisch mit 5 Gew.-% 4,4'-Diphenylmethandiisocyanat (MDI, Desmodur 44M, Fa. Bayer AG)) versetzt (Additionsverhältnis beträgt in dieser Stufe 0,4 bis 0,6:1), wobei die Reaktionstemperatur 80 °C nicht übersteigen durfte. Das Reaktionsende wurde mit einem NCO-Titrationswert von 0 % erreicht

### Weiterverarbeitung:

In einer 2. Stufe wurden 63 Ges.-% des monomerarmen, urethangruppenaufweisenden Polyisocyanats (II) zugesetzt

### Herstellung des monomerarmen, urethangruppenaufweisenden Polyisocyanats(II):

In einer dem Fachmann bekannten Apparatur wurde ein Polyetherdiol (OHZ = 130) auf 40 °C erwärmt und mit 4,4'-Diphenylmethandiisocyanat (MDI) im Verhältnis NCO:OH von 3:1 vermischt und unter Rühren aufgeheizt, wobei die Reaktionstemperatur 80 °C nicht übersteigen durfte. Nach der üblichen Nachrührzeit (z. B. bei einem 2 kg Ansatz 1,5 bis 2 Stunden) wurde das restliche MDI mit einer Dünnschichtdestillationsapparatur abdestilliert. Nach der Destillation betrug der NCO - Titrationswert 6,1 %.

### Reaktion von Komponente (Ic) mit dem monomerarmen, urethangruppenaufweisenden Polyisocyanat (II):

In einer dem Fachmann bekannten Apparatur wurde oben hergestellte Komponente (Ic) mit dem monomerarmen, urethangruppenaufweisenden Polyisocyanat (II) in den oben angegebenen Gewichtsverhältnissen vermischt (Additionsverhältnis beträgt in dieser Stufe 1,0 bis 1,4 :1) und unter Rühren aufgeheizt, wobei die Reaktionstemperatur 80 °C nicht übersteigen durfte.
Das Reaktionsende wurde mit einem NCO-Titrationswert von 2,0 % (theor. Wert: 2,3 %) erreicht.
Die Viskosität, gemessen nach Brookfield, Spindel 27, 30 Upm, 100 °C, betrug 22 500 mPas.
Der Gehalt an freiem monomeren Polyisocyanat (MDI-Monomerengehalt) lag unter 0,02 Gew.-%.

### II. Klebetechnische Untersuchungen der PU-Prepolymeren

### II. a)

Für die klebetechnischen Untersuchungen wurden Kaschierversuche auf einer Kaschiermaschine der Fa. Polytype durchgeführt.

Hierzu wurde das erfindungsgemäße Polyurethan-Prepolymere der Beispiele A + B mit einem Polyester-Polyetherpolyol (Liofol UR 6067-27, Fa. Henkel, OH-Zahl = 255) im Mischungsverhältnis von 9:1 für Beispiel A und 8,5:1 für Beispiel B vermischt und anschließend bei 70 °C aufgetragen. Das Auftragsgewicht des Gemisches betrug 2 g/ m².

### Kaschiert wurde:

- Folie aus CPP (Cast Polypropylen)/Aluminium mit einer Foliendicke von 50 Mikrometern/12 Mikrometern,
- Folie aus Polyethylen (LLDPE-Folie) mit einer Foliendicke von 70 Mikrometern,
- Folie aus CPA (Cast Polyamid) mit einer Foliendicke von 40 Mikrometern,
- Folie aus Polyethylen (LDPE-Folie, weiß pigmentiert) mit einer Foliendicke von 35 Mikrometern,

Die Verbundhaftung und die Siegelnahthaftung werden mit einer Universal-Zugprüfmaschine Zwick Z2.5 an 15 mm-breiten Streifen gemessen. (Prüfgeschwindigkeit: 100 mm/Min., Abzugswinkel 90 °)

Die Ergebnisse werden in N/15 mm angegeben und sind für Beispiel A für den Folienverbund CPP/Aluminium zu LLDPE in der Tabelle 1 (Tab. 1), für den Folienverbund CPA/LDPE in der Tabelle 2 (Tab. 2) und für Beispiel B für den Folienverbund CPP/Aluminium zu LLDPE in der Tabelle 3 (Tab. 3) sowie für den Folienverbund CPA/LDPE in der Tabelle 4 (Tab. 4), für den Folienverbund aufgelistet.

### II. b)

Für die klebetechnischen Untersuchungen wurden Kaschierversuche auf einer Kaschiermaschine der Fa. Polytype durchgeführt.

Hierzu wurde das erfindungsgemäße Polyurethan-Prepolymere aus Beispiel C mit einem Polyester-Polyetherpolyol (Liofol UR 6070, Fa. Henkel, OH-Zahl = 142) im Mischungsverhältnis von 100:65 vermischt und bei 80 °C aufgetragen. Das Auftragsgewicht des Gemisches betrug 2 g/ m².

### Kaschiert wurde:

- Folie aus Polyethylenterephthalat (PET)/Aluminium mit einer Foliendicke von 12 Mikrometern/12 Mikrometern,
- Folie aus Polyethylen (LLDPE-Folie) mit einer Foliendicke von 70 Mikrometern,
- Folie aus CPA(Cast Polyamid) mit einer Foliendicke von 40 Mikrometern.
- Folie aus Polyethylen (LDPE) mit einer Foliendicke von 35 Mikrometern.

Die Verbundhaftung und die Siegelnahthaftung werden mit einer Universal-Zugprüfmaschine Zwick Z2.5 an 15 mm-breiten Streifen gemessen. (Prüfgeschwindigkeit: 100 mm/Min., Abzugswinkel 90 °).

Die Ergebnisse werden in N/15 mm angegeben und sind in der Tabelle 5 (Tab.5) für die Messung der Innenlage PET/Aluminium zu PE (LLDPE) und für die Messung CPA zu LDPE in Tabelle 6 (Tab. 6) aufgelistet.

### II. c)

Für die klebetechnischen Untersuchungen wurden Kaschierversuche auf einer Kaschiermaschine der Fa. Polytype durchgeführt.

Hierzu wurde das erfindungsgemäße Polyurethan-Prepolymere aus Beispiel D mit einem Polyester-Polyetherpolyol (Liofol UR 6067-27, Fa. Henkel, OH-Zahl = 255) im Mischungsverhältnis von 17:1 vermischt und bei 90 °C aufgetragen. Das Auftragsgewicht des Gemisches betrug 2 g/ m².

### Kaschiert wurde:

- Folie aus CPP (Cast Polypropylen)/Aluminium mit einer Foliendicke von 50 µm/12 µm
- Folie aus Polyethylen (LLDPE-Folie) mit einer Foliendicke von 70 µm

Die Verbundhaftung und die Siegelnahthaftung der Innenlage CPP/Aluminium zu PE wurden mit einer Universal-Zugprüfmaschine Zwick Z2.5 an 15 mm-breiten Streifen gemessen. (Prüfgeschwindigkeit: 100 mm/Min., Abzugswinkel 90 °)

Die Ergebnisse werden in N/15 mm angegeben und sind in der Tabelle 7 (Tab. 7) aufgelistet.

### III. Ergebnisse

**Tab. 1**

| **Aushärtung** | **Verbundhaftung** | **Siegelnahthaftung** |
|---|---|---|
| 3 Tage | 1,0 N/15 mm | 18,6 N/15 mm |
| 7 Tage | 1,2 N/15 mm | 22,6 N/15 mm |
| 14 Tage | 3,1 N/15 mm | 23,1 N/15 mm |

**Tab. 2**

| **Aushärtung** | **Verbundhaftung** | **Siegelnahthaftung** |
|---|---|---|
| 3 Tage | 3,4 N/15 mm | 20,2 N/15 mm |
| 7 Tage | 4,8 N/15 mm | 26,0 N/15 mm |
| 14 Tage | 6,3 N/15 mm | 35,4 N/15 mm |

**Tab. 3**

| **Aushärtung** | **Verbundhaftung** | **Siegelnahthaftung** |
|---|---|---|
| 3 Tage | 4,3 N/15 mm | 28,1 N/15 mm |
| 7 Tage | 3,7 N/15 mm | 22,4 N/15 mm |
| 14 Tage | 3,1 N/15 mm | 22,2 N/15 mm |

**Tab. 4**

| **Aushärtung** | **Verbundhaftung** | **Siegelnahthaftung** |
|---|---|---|
| 3 Tage | 3,8 N/15 mm | 21,8 N/15 mm |
| 7 Tage | 6,1 N/15 mm | 32,6 N/15 mm |
| 14 **Tage** | 5,8 N/15 mm | 40,6 N/15 mm |

**Tab. 5**

| **Aushärtung** | **Verbundhaftunq** | **Siegelnahthaftunq** |
|---|---|---|
| 4 Tage | 2,0 N/15 mm | 41,0 N/15 mm |
| 7 Tage | 7,3 N/15 mm | 40,0 N/15 mm |
| 11 Tage | 7,9 N/15 mm | 43,0 N/15 mm |
| 14 Tage | 7,8 N/15 mm | 43,5 N/15 mm |

**Tab. 6**

| **Aushärtung** | **Verbundhaftung** | **Siegelnahthaftung** |
|---|---|---|
| 4 Tage | 9,5 N/15 mm | 43,0 N/15 mm |
| 7 Tage | 6,2 N/15 mm | 38,0 N/15 mm |
| 11 Tage | 6,4 N/15 mm | 40,0 N/15 mm |
| 14 Tage | 6,4 N/15 mm | 40,6 N/15 mm |

**Tab. 7**

| **Aushärtung** | **Verbundhaftung** | **Siegelnahthaftung** |
|---|---|---|
| 3 Tage | 7,3 N/15 mm | 43,3 N/15 mm |
| 7 Tage | 9,0 N/15 mm | 36,8 N/15 mm |
| 14 Tage | 8,9 N/15 mm | 44,1 N/15 mm |

Die Lagerung und Messung der kaschierten Folien erfolgte bei Raumtemperatur.

### IV Beschreibung der Meßmethoden:

- Die Bestimmung des monomeren Polyisocyanates in den erfindungsgemäßen Polyurethan-Prepolymeren erfolgte mittels Gelpermeationschromatographie (GPC) oder Hochleistungsflüssigkeitschromatographie (HPLC) nach einer hausintemen Methode.
- Die viskosimetrischen Daten wurden mit dem Viskosimeter "Brookfield Digital Viscometer RVTDV-II", Spindel 27 nach ISO 2555 bestimmt.
- Die Hydroxylzahl (OHZ) wurde nach ISO 4326 bestimmt.
- Der NCO-Gehalt wurde titrimetrisch nach Spiegelberger bestimmt (EN ISO 11909).

## Patentansprüche

1. Polyurethan-Prepolymer mit einem NCO-Gehalt von 2 Gew.-% bis 10 Gew.-% (nach Spiegelberger, EN ISO 11909), einer OH-Zahl von 0 und einem Gehalt an monomeren Polyisocyanaten von max. 2 Gew.-%, erhältlich
A) durch Mischen von
I) mindestens einer reaktiven urethangruppenaufweisenden Komponente (I), die sowohl NCO-Gruppen als auch gegenüber Isocyanatgruppen reaktionsfähige funktionelle Gruppen enthält, mit
II) mindestens einem monomerarmen, urethangruppenaufweisenden Polyisocyanat (II), wobei das monomerarme urethangruppenaufweisende Polyisocyanat (II) erhältlich ist durch Umsetzung von
- mindestens einem monomeren Polyisocyanat mit mindestens einem Polyol im NCO : OH-Verhältnis von 2 : 1 bis 10 : 1 und anschließende Abtrennung von nichtreagiertem monomeren Polyisocyanat
und wobei
- der gewichtsmäßige Anteil von der reaktiven urethangruppenaufweisenden Komponente (I) im Gemisch von Komponente (I) und Polyisocyanat (II) im Bereich von 20 - 90 Gew.-% liegt,
B) sowie ggf. anschließender Reaktion der Komponenten (I) und (II).

2. Polyurethan-Prepolymer nach Anspruch 1, **dadurch gekennzeichnet, dass** der Gehalt an monomeren Polyisocyanaten maximal 1 Gew.-% beträgt.

3. Polyurethan-Prepolymer nach Anspruch 1 oder 2, **dadurch gekennzeichnet, dass** die Viskosität bei 100 °C 100 mPas bis 25 000 mPas, gemessen nach Brookfield (ISO 2555), beträgt.

4. Polyurethan-Prepolymer nach einem Ansprüche 1 bis 3, **dadurch gekennzeichnet, dass** Komponente (I) erhältlich ist durch Umsetzung von mindestens einer gegenüber Isocyanaten reaktionsfähigen funktionellen Gruppen tragenden Verbindung mit mindestens einem unsymmetrischen monomeren Polyisocyanat, ausgewählt aus der Gruppe:
alle Isomeren des Toluylendiisocyanat (TDI), entweder in isomerenreiner Form oder als Mischung mehrerer Isomerer; 1 -lsocyanatomethyl-3-isocyanato-1,5,5-trimethyl-diisocyanat (isophorondiisocyanat, IPDI); 2,4-Diphenylmethandiisocyanat.

5. Polyurethan-Prepolymer nach Anspruch 4, **dadurch gekennzeichnet, dass** Komponente (I) charakterisiert ist durch
a) eine molare Masse von 500 bis 20 000 g/mol, bestimmt durch Gelpermeationschromatografie (GPC),
b) eine Viskosität von 500 bis 25 000 mPas, bestimmt nach Brookfield (ISO 2555), bei einer Temperatur von 20 °C bis 100 °C,
c) einen NCO-Gehalt im Bereich von 1 bis 10 Gew.-%, bestimmt nach Spiegelberger (EN ISO 11909) und
d) eine OH-Zahl, bestimmt nach ISO 4326, im Bereich von 5 bis 50.

6. Polyurethanprepolymer nach Anspruch 1 bis 5, **dadurch gekennzeichnet, dass** das monomerarme polyurethangruppenaufweisende Polyisocyanat (II) ein Gehalt an nicht umgesetzten monomeren Polyisocyanat von 0 bis 0,5 Gew.-%, bezogen auf (II) und eine OH-Zahl von 0 besitzt.

7. Verfahren zur Herstellung eines Polyurethan-Prepolymeren nach mindestens einem der vorhergehenden Ansprüche 1 bis 6, **dadurch gekennzeichnet, dass**
- in einem ersten Reaktionsschritt mindestens eine reaktive urethangruppenaufweisende Komponente
(I) hergestellt wird, indem man mindestens ein unsymmetrisches monomeres Polyisocyanat mit mindestens einer, gegenüber Isocyanaten reaktive funktionelle Gruppen tragende Verbindung im Verhältnis NCO:OH zwischen 1,05 bis 1,8:1 umsetzt, bis die reaktiveren NCO-Gruppen des monomeren Polyisocyanats praktisch vollständig mit einem Teil der Verfügbaren, gegenüber Isocyanat-Gruppen reaktiven funktionellen Gruppen reagiert haben
- in einem zweiten Schritt mindestens ein monomerarmes, urethangruppenaufweisende Polyisocyanat (II) hergestellt wird, durch Umsetzung von mindestens einem monomeren Polyisocyanat mit mindestens einem Polyol im NCO:OH-Verhältnis 2:1 bis 10:1 mit anschließender Abtrennung von nicht reagiertem monomeren Polyisocyanat und anschließend
die reaktive urethangruppenaufweisende Komponente (I) und Polyisocyanat (II) mischt, wobei das monomerarme, urethangruppenaufweisende Polyisocyanat (II) im Überschuss, bezogen auf die noch freien, gegenüber Isocyanat reaktiven funktionellen Gruppen der urethangruppenaufweisenden Komponente (I) zusetzt und reagieren lässt.

8. Verfahren zur Herstellung des monomeren, urethangruppenaufweisenden Polyisocyanats (II) nach Anspruch 7, **dadurch gekennzeichnet, dass** die Entfernung des überschüssigen monomeren Diisocyanates aus dem Reaktionsgemisch durch Destillations-, Extraktions-, Chromatografische-, Kristallisation-Verfahren einzeln oder ggf. in Kombination der aufgeführten Verfahren erfolgt.

9. Verwendung eines nach mindestens einem der Ansprüche 1 bis 6 sowie nach den Ansprüchen 7 und 8 hergestellten PU-Prepolymeren zusammen mit üblichen Härtern und/oder Feuchtigkeit, gewünschtenfalls in Gegenwart von organischen Lösemitteln und üblichen Beschleunigern und Additiven, zum Verkleben von Kunststoffen, Metallen und Papieren, insbesondere von Folien.

10. Verwendung eines Polyurethan-Prepolymeren nach Anspruch 9 als Klebstoff für flexible Verpackungen.

## Claims

1. A polyurethane prepolymer having an NCO content of 2% by weight to 10% by weight (according to Spiegelberger, EN ISO 11909), an OH number of 0, and a content of monomeric polyisocyanates of a maximum of 2% by weight, obtainable
A) by mixing
I. at least one reactive urethane group-containing component (I), which also contains both NCO groups and functional groups capable of reacting with isocyanate groups, with
II. at least one low-monomer, urethane group-containing polyisocyanate (II), whereby the low-monomer, urethane group-containing polyisocyanate (II) can be obtained by reacting
- at least one monomeric polyisocyanate with at least one polyol in an NCO:OH ratio of 2:1 to 10:1 and subsequently removing unreacted monomeric polyisocyanate
and whereby
- the percentage by weight of the reactive urethane group-containing component (I) in the mixture of component (I) and polyisocyanate (II) is in the range of 20 to 90% by weight,
B) and optionally subsequently reacting components (I) and (II).

2. The polyurethane prepolymer according to claim 1, **characterized in that** the content of monomeric polyisocyanates is a maximum of 1% by weight.

3. The polyurethane prepolymer according to claim 1 or 2, **characterized in that** the viscosity at 100°C is 100 mPas to 25,000 mPas, measured according to Brookfield (ISO 2555).

4. The polyurethane prepolymer according to one of claims 1 to 3, **characterized in that** component (I) is obtainable by reacting at least one compound, containing isocyanate-reactive functional groups, with at least one asymmetric monomeric polyisocyanate, selected from the group:
all isomers of toluylene diisocyanate (TDI), either in the isomerically pure form or as a mixture of a plurality of isomers; 1-isocyanatomethyl-3-isocyanato-1,5,5-trimethyl diisocyanate (isophorone diisocyanate, IPDI); and 2,4-diphenylmethane diisocyanate.

5. The polyurethane prepolymer according to claim 4, **characterized in that** component (I) is **characterized**
a) **by** a molar mass of 500 to 20,000 g/mol, determined by gel permeation chromatography (GPC),
b) by a viscosity of 500 to 25,000 mPas, determined according to Brookfield (ISO 2555), at a temperature of 20°C to 100°C,
c) an NCO content in the range of 1 to 10% by weight, determined according to Spiegelberger (EN ISO 11909), and
d) an OH number, determined according to ISO 4326, in the range of 5 to 50.

6. The polyurethane prepolymer according to claim 1 to 5, **characterized in that** the low-monomer, polyurethane group-containing polyisocyanate (II) has a content of unreacted monomeric polyisocyanate of 0 to 0.5% by weight, based on (II), and an OH number of 0.

7. A method for preparing a polyurethane prepolymer according to at least one of the preceding claims 1 to 6, **characterized in that**
- in a first reaction step at least one reactive urethane group-containing component (I) is prepared **in that** at least one asymmetric monomeric polyisocyanate is reacted with at least one compound containing isocyanate-reactive functional groups in an NCO:OH ratio between 1.05 to 1.8:1 until the more reactive NCO groups of the monomeric polyisocyanate have reacted almost completely with part of the available isocyanate group-reactive functional groups,
- in a second step at least one low-monomer, urethane-group-containing polyisocyanate (II) is prepared by reacting at least one monomeric polyisocyanate with at least one polyol in an NCO:OH ratio of 2:1 to 10:1 with subsequent separation of unreacted monomeric polyisocyanate and subsequently combining
reactive urethane group-containing component (I) and polyisocyanate (II), whereby the low-monomer, urethane group-containing polyisocyanate (II) is added in excess, based on the still free isocyanate-reactive functional groups of the urethane-group containing component (I), and is allowed to react.

8. The method for preparing the monomeric urethane group-containing polyisocyanate (II) according to claim 7, **characterized in that** the removal of the excess monomeric diisocyanate from the reaction mixture occurs by distillation, extraction, chromatography, or crystallization processes individually or optionally in combination with the recited processes.

9. Use of a PU prepolymer, prepared according to at least one of claims 1 to 6 and according to claims 7 and 8, together with conventional curing agents and/or moisture, optionally in the presence of organic solvents and conventional accelerators and additives, for the gluing of plastics, metals, and paper, especially of films.

10. The use of a polyurethane prepolymer according to claim 9 as an adhesive for flexible packaging.

## Revendications

1. Prépolymère de polyuréthane ayant une teneur en NCO de 2% en poids à 10% en poids (selon Spiegelberger, EN ISO 11909), un indice OH de 0 et une teneur en polyisocyanates monomères de 2% en poids maximum, pouvant être obtenu par les opérations consistant à
A) mélanger
I) au moins un composant réactif (I), comportant des groupes uréthane, qui contient à la fois des groupes NCO et des groupes fonctionnels réactifs vis-à-vis des groupes isocyanates, à
II) au moins un polyisocyanate (II) pauvre en monomères e comportant des groupes uréthane, le polyisocyanate (II) pauvre en monomère et comportant des groupes uréthane étant obtenu par réaction
- d'au moins un polyisocyanate monomère avec au moins un polyol dans un rapport NCO:OH de 2:1 à 10:1 puis par séparation du polyisocyanate monomère qui n'a pas réagi
et
- le pourcentage en poids du composant réactif (I), comportant des groupes uréthane, dans le mélange de composant (I) et de polyisocyanate (II) étant dans la gamme de 20 à 90% en poids,
B) puis faire réagir éventuellement les composants (I) et (II).

2. Prépolymère de polyuréthane selon la revendication 1, **caractérisé en ce que** la teneur en polyisocyanates monomères est de 1% en poids maximum.

3. Prépolymère de polyuréthane selon la revendication 1 ou 2, **caractérisé en ce que** la viscosité à 100°C est de 100 mPas à 25000 mPas, mesurée selon Brookfield (ISO 2555).

4. Prépolymère de polyuréthane selon l'une des revendications 1 à 3, **caractérisé en ce que** le composant (I) peut être obtenu par réaction d'au moins composé, porteur de groupes fonctionnels réactifs vis-à-vis des isocyanates, avec au moins un polyisocyanate monomère asymétrique, choisi dans le groupe comportant :
tous les isomères du diisocyanate de toluène (TDI), soit sous forme d'isomères purs ou sous forme de mélange de plusieurs isomères; le 1-isocyanatométhyl-3-isocyanato-1,5,5-triméthyl-diisocyanate (diisocyanate d'isophorone, IPDI) ; le 2,4-diisocyanate de diphénylméthane.

5. Prépolymère de polyuréthane selon la revendication 4, **caractérisé en ce que** le composant (I) est **caractérisé par**
a) un poids molaire de 500 à 20000 g/mol, déterminé par chromatographie par perméation de gel (GPC),
b) une viscosité de 500 à 25000 mPas, déterminée selon Brookfield (ISO 2555), à une température de 20°C à 100°C,
c) une teneur en NCO dans la gamme de 1 à 10% en poids, déterminée selon Spiegelberger (EN ISO 11909) et
d) un indice OH déterminé selon la norme ISO 4326 dans la gamme de 5 à 50.

6. Prépolymère de polyuréthane selon la revendication 1 à 5, **caractérisé en ce que** le polyisocyanate (II), pauvre en monomères et comportant des groupes polyuréthane, a une teneur en polyisocyanate monomère non transformé de 0 à 0,5% en poids, par rapport à (II), et un indice OH de 0.

7. Procédé de préparation d'un prépolymère de polyuréthane selon l'une des revendications précédentes 1 à 6, **caractérisé en ce que**
- dans une première étape de réaction au moins un composant réactif, comportant des groupes uréthane,
(I) est préparé par réaction d'au moins un polyisocyanate monomère asymétrique avec au moins un composé, porteur de groupes fonctionnels réactifs vis-à-vis des isocyanates, dans le rapport NCO:OH allant de 1,05:1 à 1,8:1 jusqu'à ce que les groupes NCO plus réactifs du polyisocyanate monomère aient pratiquement complètement réagi avec une partie des groupes fonctionnels réactifs vis-à-vis des groupes isocyanates,
- dans une seconde étape, au moins un polyisocyanate (II), pauvre en monomères et comportant des groupes uréthane, est préparé par réaction d'au moins un polyisocyanate (II) monomère avec au moins un polyol dans le rapport NCO:OH allant de 2:1 à 10:1, puis par séparation du polyisocyanate monomère qui n'a pas réagi et **en ce que** ensuite
le composant réactif (I), comportant des groupes uréthane, et le polyisocyanate (II) sont mélangés, le polyisocyanate (II), pauvre en monomères et comportant des groupes uréthane, étant ajouté en excès, par rapport aux groupes fonctionnels réactifs vis-à-vis de l'isocyanate, qui sont encore libres, et laissé à réagir.

8. Procédé de préparation du polyisocyanate (II) monomère, comportant des groupes uréthane, selon la revendication 7, **caractérisé en ce que** l'élimination du diisocyanate monomère en excès du mélange réactionnel est effectuée par un procédé de distillation, d'extraction, de chromatographie, de cristallisation, seul ou éventuellement en combinaison avec le procédé mis en oeuvre.

9. Utilisation d'un prépolymère de polyuréthane préparé selon au moins l'une des revendications 1 à 6 et selon les revendications 7 et 8 conjointement avec des durcisseurs usuels et/ou de l'humidité, éventuellement en présence de solvants organiques et d'accélérateurs et additifs usuels, pour le collage de matières plastiques, de métaux et de papiers, en particulier de films.

10. Utilisation d'un prépolymère de polyuréthane selon la revendication 9 comme adhésif pour emballages souples.
